# FASCICULE DE BREVET EUROPEEN

(11) **EP 2 671 799 B1**
(45) Date de publication et mention de la délivrance du brevet: **31.08.2016**
(21) Numéro de dépôt: 13290122.4
(22) Date de dépôt: 04.06.2013
(51) Int. Cl.: B64D 1/08, G01S 7/38

(54) **Procédé, dispositif et système de leurrage pour la protection d'un aéronef.**
Täuschverfahren, -vorrichtung und -system zum Schutz eines Luftfahrzeugs
Decoying method, device and system for protecting an aircraft.

(30) Priorité: 07.06.2012 FR 1201642
(43) Date de publication de la demande: 11.12.2013
(73) Titulaire: MBDA France, 92350 Le Plessis-Robinson (FR)
(72) Inventeur: Rafin, Vincent, 18000 Bourges (FR); LE Louarn, Guillaume, 29870 Coat-Meal (FR)
(74) Mandataire: Gevers & Orès

(56) Documents cités:
- GB-A- 1 605 461
- US-A- 4 852 455
- US-A- 4 852 456
- US-A1- 2004 069 898

## Description

La présente invention concerne un procédé et un dispositif de leurrage pour la protection d'un aéronef tel qu'un avion ou un hélicoptère.

On sait que, pour répondre aux différentes menaces auxquelles doit faire face un avion de combat, par exemple, celui-ci est équipé, en plus des systèmes d'armes offensifs usuels, de systèmes de leurrage défensifs embarqués. Selon le type de menaces, les systèmes emportent des dispositifs de leurrage avec des charges de différentes natures, par exemple, électromécaniques (paillettes), électromagnétiques (brouillage), pyrotechniques (infrarouge).

Dans le cas de leurres infrarouges, la charge à éjecter se présente sous la forme d'un pain commandable, parallélépipédique ou autre, issu d'un étui ou tube de réception du dispositif embarqué sur l'avion.

De telles charges de leurrage présentent l'inconvénient que, après leur éjection de l'aéronef porteur, elles sont soumises à un freinage important dû à leur traînée élevée, de par leur forme irrégulière, non profilée, de sorte que l'aéronef porteur s'éloigne rapidement d'eux. Il en résulte que la protection qu'ils apportent à l'aéronef est de courte durée.

Pour améliorer l'efficacité de ces dispositifs de leurrage, les leurres avec leur charge peuvent être enfermés dans des corps cylindriques logés dans des supports tubulaires de réception des systèmes solidaires de l'avion, pour être éjectés du support parallèlement au flux aérodynamique de l'avion. Ainsi, lorsqu'une menace est détectée, le corps cylindrique du dispositif (avec le leurre et sa charge de leurrage) ainsi éjecté du support tubulaire et par sa forme profilée se stabilise plus rapidement dans le flux aérodynamique de l'avion et reste proche de celui-ci plus longtemps.

Cependant, se pose le problème d'éjecter la charge de leurrage, notamment lorsqu'elle est pyrotechnique, hors du corps cylindrique. En effet, une fois éjectée du corps, la charge initiée présente les mêmes inconvénients que précédemment, à savoir, une forte traînée et une efficacité de courte durée par l'éloignement rapide entre l'avion et la charge.

Par le document US 4 852 456, on connaît un système de leurrage dans lequel la charge de leurrage est sortie du corps par câble lié à l'avion.

Le document GB1605461 divulgue les caractéristiques des préambules des revendications 1 et 5.

La présente invention a pour but de remédier à ces inconvénients et concerne un procédé et un dispositif de leurrage permettant d'optimiser l'efficacité des charges de leurrage, de préférence, quoique non exclusivement, lorsqu'elles sont du type infrarouge.

À cet effet, le procédé de leurrage pour la protection d'un aéronef au moyen d'au moins un leurre embarqué éjectable, pourvu d'une charge de leurrage, est du type dans lequel :
- on enferme ledit leurre dans un corps cylindrique fuselé, monté de façon éjectable sur l'aéronef,
- on éjecte ledit corps cylindrique fuselé enfermant le leurre, parallèlement au flux aérodynamique de l'aéronef, et
- on sort la charge de leurrage dudit corps.

Selon l'invention, le procédé est remarquable par le fait que, après l'éjection du corps cylindrique,
- on maintient ladite charge de leurrage en position sortie hors dudit corps cylindrique fuselé éjecté, et solidaire de ce dernier, et
- on commande ladite charge de leurrage sortie du corps pour la rendre active.

Ainsi, comme la charge du leurre est maintenue dans le corps cylindrique fuselé dont le profil, de faible traînée, lui permet de rester davantage dans le flux aérodynamique de l'avion, l'efficacité de la charge est alors maximale. Non seulement, elle suit au mieux, par le corps cylindrique, l'aéronef mais, de plus, étant au contact direct du milieu extérieur, toute l'énergie de la charge, lorsqu'elle est initiée, est dédiée au leurrage proprement dit, et non à la destruction d'une enveloppe ou couche protectrice qui viendrait amputer les performances de la charge.

Par ailleurs, comme la charge du leurre reste liée au corps cylindrique, le dispositif résultant, à savoir le corps cylindrique et le leurre, est plus lourd, de sorte que sa décélération sera d'autant plus faible, lui permettant de suivre plus longtemps l'aéronef et d'assurer une plus grande protection de celui-ci.

Avantageusement, on déplace par coulissement la charge par rapport au corps cylindrique fuselé. Ainsi, une simple translation permet de sortir la charge du corps cylindrique.

Par rapport au corps cylindrique fuselé, on peut faire coulisser la charge vers l'avant ou l'arrière dudit corps. On peut aussi prévoir deux leurres avec respectivement une charge en avant du corps cylindrique et une charge en arrière dudit corps, lesdites charges étant aptes à sortir simultanément ou séquentiellement du corps tout en étant maintenues solidaires de celui-ci.

L'invention concerne également un dispositif de leurrage pour la protection d'un aéronef, mettant en oeuvre le procédé ci-dessus et du type comportant, dans un corps cylindrique fuselé, au moins un leurre ayant une charge de leurrage, et des moyens de sortie commandables de la charge de leurrage par rapport au corps.

Selon la présente invention, le dispositif est remarquable par le fait que ledit corps cylindrique fuselé est éjectable et par le fait que les moyens de sortie commandables sont prévus entre le leurre et le corps cylindrique et sont aptes à maintenir la charge de leurrage en position sortie, par rapport au corps, solidaire de ce dernier.

On remarquera que le document US 2004/069898 décrit un dispositif de leurrage pour aéronef comportant un corps solidaire dudit aéronef et logeant un leurre ayant une charge de leurrage et des moyens de sortie commandables du leurre par rapport audit corps, un câble étant prévu entre le leurre et ledit corps pour remorquer ledit leurre derrière ledit aéronef.

De préférence, dans le dispositif conforme à la présente invention, les moyens de sortie et de maintien de la charge sont du type par coulissement selon l'axe du corps cylindrique fuselé, pour occuper une position rentrée, pour laquelle la charge de leurrage est enfermée, et une position sortie, pour laquelle la charge est hors dudit corps, tout en étant maintenue par rapport à celui-ci.

Par exemple, les moyens de sortie et de maintien peuvent comprendre des rails de support parallèles, aptes à coulisser par rapport au corps cylindrique et entre lesquels est reçue et maintenue la charge de leurrage en position sortie.

En variante, les moyens de sortie et de maintien peuvent être du type télescopique, logés dans le corps cylindrique et maintenant la charge de leurrage en position sortie par rapport au corps cylindrique.

En particulier, pour faire passer les moyens de sortie et de maintien de la position rentrée, à l'intérieur du corps, à la position sortie, à l'extérieur du corps, le dispositif comporte des moyens commandables à impulseur montés dans le leurre.

En outre, le dispositif inclut des moyens de sécurité prévus dans le leurre entre les moyens commandables à impulseur et la charge de leurrage, empêchant tout déclenchement de la charge, tant que les moyens de sortie et de maintien occupent la position rentrée.

Par ailleurs, les moyens commandables à impulseur peuvent commander, en plus du déplacement des moyens de sortie et de maintien, la mise en fonctionnement de la charge de leurrage lorsqu'elle est en position sortie.

L'invention concerne également un système de leurrage pour la protection d'un aéronef, le système comportant :
- un support tubulaire pour la réception d'un corps cylindrique fuselé d'un dispositif de leurrage, ledit support étant apte à être fixé à l'aéronef ; et
- un mécanisme d'éjection du dispositif de leurrage par rapport audit support.

Le système est remarquable par le fait que le dispositif de leurrage est tel que défini précédemment.

Les figures du dessin annexé feront bien comprendre comment l'invention peut être réalisée. Sur ces figures, des références identiques désignent des éléments semblables.
La figure 1 est une vue schématique et partielle d'un aéronef équipé d'un système de leurrage embarqué comportant plusieurs dispositifs de leurrage conformément à l'invention.
La figure 2 représente, en coupe axiale, l'un des dispositifs de leurrage monté dans un berceau de support du système de leurrage, avant l'éjection du dispositif dudit berceau.
La figure 3 représente, vu en plan, le dispositif de leurrage après son éjection du berceau de support dans le flux aérodynamique de l'aéronef, et avant la sortie de la charge de leurrage du dispositif.
La figure 4 représente, en coupe axiale, le dispositif de leurrage éjecté, avec la charge de leurrage hors du corps cylindrique du dispositif, à la suite du déplacement par coulissement des moyens de sortie et de maintien.
La figure 5 montre en perspective le dispositif de leurrage éjecté avec la charge sortie.
La figure 6 représente, en coupe axiale, une variante de réalisation des moyens de sortie et de maintien du dispositif, en position sortie de la charge.
La figure 7 représente, en coupe axiale, une autre variante du dispositif de leurrage équipé d'un leurre avant et d'un leurre arrière avec les charges respectives sorties, hors du corps cylindrique.

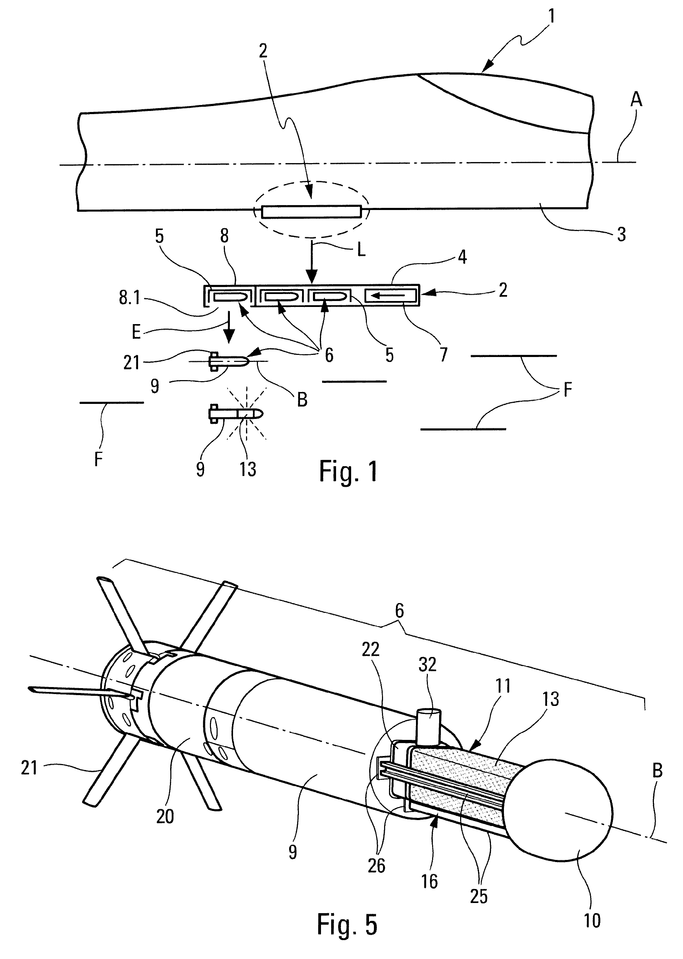

L'aéronef 1, tel qu'un avion de combat représenté partiellement sur la figure 1, est équipé d'un système de leurrage 2, symbolisé par un rectangle sous le fuselage 3 de l'avion et illustré avec agrandissement et schématiquement par la loupe L, sous l'avion. L'axe longitudinal A de ce dernier est également indiqué, de même que le flux aérodynamique symbolisé par des flèches F entre l'air et le milieu extérieur, et sensiblement parallèle à l'axe A.

Le système 2 peut être celui enseigné dans la demande de brevet français 11 02193 de la Demanderesse, et on pourra ainsi s'y reporter pour de plus amples informations.

Brièvement, ce système de leurrage 2 de forme allongée comprend au moins un tube cylindrique 4, à l'intérieur duquel sont logés successivement des berceaux de support 5 pour la réception de dispositifs de leurrage 6 de l'invention, désignés également projectiles ou véhicules de leurrage, un mécanisme de commande 7 pour l'avance successive des berceaux 5 à projectiles 6 dans le tube 4 et, dans cette réalisation, un module 8 pour éjecter, à travers une ouverture latérale 8.1 ménagée dans le module, le projectile préalablement séparé de son berceau de support, dans le milieu extérieur selon la flèche E, comme le montre la figure 1.

Par l'agencement du tube 4 du système 2 parallèlement à l'axe A de l'avion, et par le module 8 éjectant orthogonalement, par l'ouverture 8.1, le projectile 6 hors du tube, le projectile reste parallèle pour se trouver sensiblement dans le flux aérodynamique F. En effet, comme le projectile 6 comporte un corps de révolution cylindrique, fuselé 9, d'axe longitudinal B et de section annulaire, il s'oriente directement parallèlement au flux après éjection et offre une traînée minimale. De la sorte, le projectile se stabilise rapidement dans le flux et reste au voisinage de l'avion, le temps de la fonctionnalité de la charge de leurrage présente dans le logement interne 9.1 du corps cylindrique 9 du projectile.

Pour rappel, le système 2 pourrait comporter plusieurs tubes 4 en parallèle, avec une série de dispositifs de leurrage 6 dans chacun d'eux. Le corps cylindrique fuselé 9, identique pour chaque dispositif de leurrage, pourrait aussi contenir, dans son logement interne, différents types de charges pour faire face aux différentes menaces rappelées précédemment.

Un même corps peut même contenir plusieurs charges, avec notamment des mises en fonctionnement séquencées.

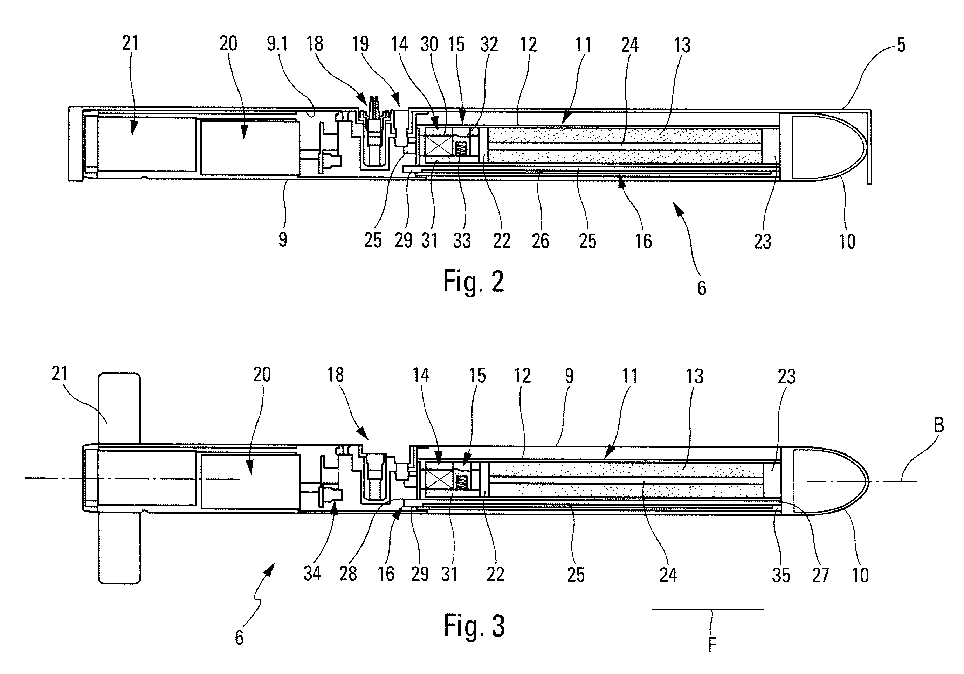

Le dispositif de leurrage montré sur la figure 2 se trouve associé à son berceau respectif de support 5, introduit dans le module d'éjection, par exemple, prêt à être tiré.

Dans le corps cylindrique fuselé 9, le dispositif de leurrage 6 se compose de plusieurs parties distinctes.

Ainsi, d'avant en arrière, se trouve une partie avant à coiffe arrondie 10 terminant le corps fuselé. Puis, la partie suivante contient le leurre 11 proprement dit avec, à l'intérieur d'un étui ou enveloppe cylindrique ou parallélépipédique 12, sa charge 13, pyrotechnique par exemple, des moyens commandables à impulseur 14, des moyens de sécurité 15 et, selon l'invention, des moyens déplaçables de sortie et de maintien 16 de la charge.

Après la partie à leurre 11 se trouvent une partie médiane avec des moyens d'éjection 18 du dispositif de leurrage 6 par rapport au berceau 5, et un connecteur 19 permettant la communication du dispositif avec l'avion, et une partie dans laquelle est logée, en particulier, la source d'énergie 20 (piles, etc.) nécessaire et alimentant les différents composants du dispositif. Au niveau des moyens d'éjection 18 est prévu également le mécanisme de verrouillage du dispositif par rapport au berceau, non visible, sur les figures et décrit dans la demande de brevet précitée.

Enfin, le dispositif comporte une partie arrière dans laquelle se trouvent des empennages déployables 21 du dispositif participant à sa stabilisation dans le flux aérodynamique (voir notamment la figure 1 avec le projectile ou dispositif 6 et les empennages déployés 21 dès son éjection, selon la flèche E, du berceau 5, et cela avant et après la sortie de la charge 13 du leurre 11 par les moyens 16).

Comme le montrent les figures 2 et 3, le leurre 11 est logé à l'intérieur du corps cylindrique 9 avec son étui 12 fixe par rapport au corps, tandis que la charge 13 est reçue dans l'étui en étant axialement coulissante par rapport celui-ci, et donc au corps. La charge 13 se termine par des supports transversaux d'extrémité 22, 23 logés dans l'étui et liés axialement par une tige centrale 24, le support 22 étant tourné vers les moyens à impulseur et de sécurité 14, 15, tandis que l'autre support 23 est associé fixement à la partie à coiffe 10. La charge est ainsi disposée autour de la tige 24 et entre les deux supports 22, 23.

La charge de leurrage, bien que du type pyrotechnique dans cet exemple, pourrait être du type pyrophorique, du type électromagnétique (paillettes) à des fins de brouillage, ou autre.

Entre l'étui 12 du leurre et le corps cylindrique 9 sont prévus les moyens de sortie 16 de la charge qui sont à déplacement par coulissement. Dans l'exemple de réalisation représenté sur les figures 2 à 5, les moyens de support déplaçables 16 se présentent sous la forme de rails coulissants 25, parallèles et espacés les uns des autres, de manière à sortir la charge 13 hors du corps, à supporter la charge et à maintenir celle-ci en place entre la partie à coiffe 10 et le corps cylindrique 9 lorsqu'elle est sortie du corps cylindrique par suite du coulissement des rails.

En particulier, les rails 25 sont, par exemple, au nombre de trois en étant répartis autour de la charge 13 de manière à enserrer celle-ci (un rail inférieur et deux autres sur les côtés sensiblement en opposition, voir la figure 5). Les rails 25 sont montés dans des coulisses 26 rapportées le long de l'intérieur du corps cylindrique ou formées dans celui-ci. Et ils se terminent par des extrémités distales 27 solidaires de la coiffe 10, tandis que ses extrémités proximales 28 restent à l'intérieur du corps cylindrique 9 et se terminent par des épaulements externes 29 destinés à servir de butée axiale en position sortie des rails.

Les moyens de déplacement 16 liés à la coiffe dans cet exemple pourraient se situer du côté des empennages 21 pour sortir la charge vers l'arrière du projectile 6.

Lorsque l'ordre d'éjection du dispositif de leurrage 6 par rapport au berceau de support 5 est donné, les moyens d'éjection 18 du type pyrotechnique agissent et effacent le mécanisme de verrouillage à doigts escamotables libérant le dispositif 6 du berceau de support, perpendiculairement à celui-ci, de la manière indiquée dans la demande de brevet français précitée.

Le processus d'éjection du dispositif de leurrage 6 est ainsi commencé.

Dès la sortie du dispositif 6 dans le milieu extérieur avec le corps de révolution cylindrique et aérodynamique 9, d'axe B, sensiblement parallèle au flux F, les empennages 21 initialement repliés, logés dans la partie arrière du corps cylindrique, se déploient spontanément sous l'action d'éléments élastiques associés (ressorts) non représentés, et permettent ainsi de stabiliser efficacement le dispositif de leurrage dans le flux F, avec une traînée minimale par la forme fuselée du corps cylindrique à coiffe.

La figure 3 représente un tel instant.

À ce moment, il convient de sortir et d'activer la charge 13 du leurre 11. Pour cela, les moyens de mise à feu à impulseur 14 contenant une charge interne non représentée sont commandés. Ces moyens 14 sont fixés au niveau de la partie médiane du dispositif 6 et sont reçus dans un alésage axial 30 d'un manchon cylindrique 31 qui est monté dans l'étui 12 en étant lié, dans cet exemple, au support transversal 22 de la charge 13. Dans l'alésage 30 du manchon sont situés les moyens de sécurité 15 qui empêchent, grâce à un doigt transversal 32 en butée contre l'étui par l'action d'un ressort 33, la communication entre la charge de l'impulseur 14 et la charge de leurrage 13.

Ces moyens 14, connus en soi, sont notamment utilisés dans les leurres directement expulsés d'un aéronef.

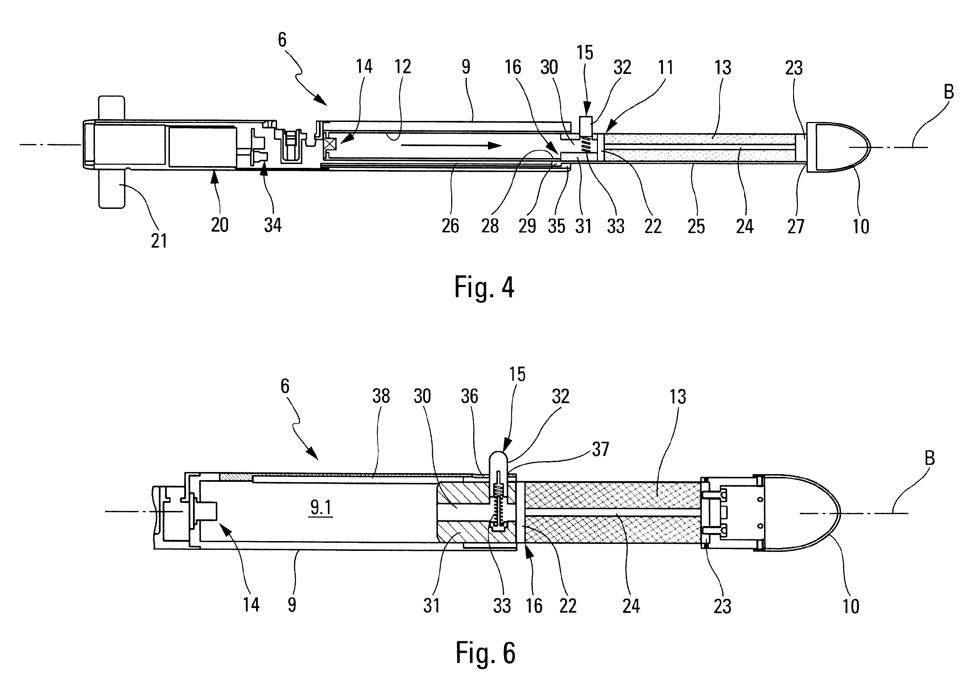

La commande des moyens 14 par l'initiation de la charge interne de l'impulseur est obtenue par un équipement de mise à feu électrique 34 situé dans la partie médiane du projectile et relié à la source d'énergie 20. L'impulseur 14 de la charge interne est alors mis à feu et les gaz issus de la charge interne entraînent le déplacement en translation des rails 25 dans les coulisses 26 du corps cylindrique 9, de la charge 13 du leurre par rapport à son étui fixe 12, et de la partie à coiffe 10 fixée au support 23. Et cela jusqu'au moment où les épaulements externes 29 des rails s'appliquent contre un épaulement interne 35 terminant le corps cylindrique 9 faisant office de butée axiale. La charge de leurrage 13 occupe alors la position sortie, hors du corps cylindrique 9 et de son étui 12, en étant maintenue par les rails 25 et les supports 22, 23, comme le montrent les figures 4 et 5.

Par suite du coulissement de la charge 13 avec le manchon cylindrique 31 lié au support 22, le doigt transversal 32 des moyens de sécurité se trouve hors du corps et sort ainsi radialement du manchon cylindrique 31 sous l'action du ressort 33, ce qui libère l'alésage 30 du manchon et met en communication, dans cet exemple, les gaz de la charge de l'impulseur 14 avec la charge 13 (le support transversal 22 présentant une ouverture centrale, non représentée, pour le passage des gaz). Le doigt saillant 32 marque la position sortie des rails et empêche leur retour en position rentrée.

La charge 13 est ainsi mise en fonctionnement et elle engendre un rayonnement optimal sur toute sa périphérie avec une puissance instantanée maximale puisqu'elle se trouve directement en contact avec le milieu extérieur, sans l'étui. Son efficacité, notamment lorsqu'il s'agit d'une charge pyrotechnique ou analogue, est alors optimale vis-à-vis de menaces à guidage thermique.

Cependant, la charge de leurrage en position sortie peut être initiée par tout autre moyen que la charge interne de l'impulseur, tel qu'un moyen de déclenchement associé directement à celle-ci. On peut également envisager la sortie et la mise à feu de la charge par les gaz issus de l'impulseur permettant l'éjection du dispositif par rapport au berceau.

On comprend donc que le dispositif de leurrage 6 ainsi décrit atteint ses objectifs en termes d'optimisation du suivi de l'avion par la diminution de la décélération obtenue d'une part, par une réduction de la traînée aérodynamique (projectile directement orienté dans le flux aérodynamique, forme cylindrique fuselé avec un Cx réduit, et stabilité et portance améliorées par les empennages et la forme de la coiffe) et, d'autre part, par une augmentation de la masse éjectée suite au maintien de la charge avec le projectile.

Une variante de réalisation des moyens de sortie et de maintien 16 de la charge est montrée en regard de la figure 6. En lieu et place des rails coulissants, les moyens de sortie 16 sont télescopiques à la manière d'un cylindre, avec le leurre 11 faisant lui-même office de moyens de sortie en pouvant coulisser par rapport au corps 9. Le leurre est notamment cylindrique, monté dans le logement interne correspondant 9.1 du corps cylindrique 9 et, sous l'action des moyens à impulseur 14, la charge 13 avec les supports, le manchon et la partie à coiffe, coulisse par rapport à son étui et donc au corps cylindrique, jusqu'à la position sortie illustrée pour laquelle elle se trouve hors du corps tout en étant liée à celui-ci.

La position de sortie est marquée par l'engagement du doigt 32 des moyens de sécurité, sous l'action du ressort 33, dans une lumière oblongue fermée 36 ménagée dans le corps cylindrique 9 parallèlement à l'axe B de celui-ci. On voit, sur la figure 6, que le doigt 32 bute ainsi axialement contre le fond correspondant 37 de la lumière en maintenant la charge sortie par rapport au corps.

On note, par ailleurs, qu'une rainure longitudinale 38 est ménagée dans le corps 9 pour assurer le guidage axial du leurre et, donc de la charge, entre la position initiale rentrée et la position finale sortie par suite de l'activation de l'impulseur. Le manchon cylindrique 31, auquel est lié le support 22 de la charge 13, reste ainsi dans le corps à des fins de guidage et de maintien du leurre en position sortie avec la coiffe, tandis que le support 23 est fixé, comme précédemment, à la partie à coiffe 10, la tige de liaison 24 reliant les deux supports avec la charge autour de celle-ci.

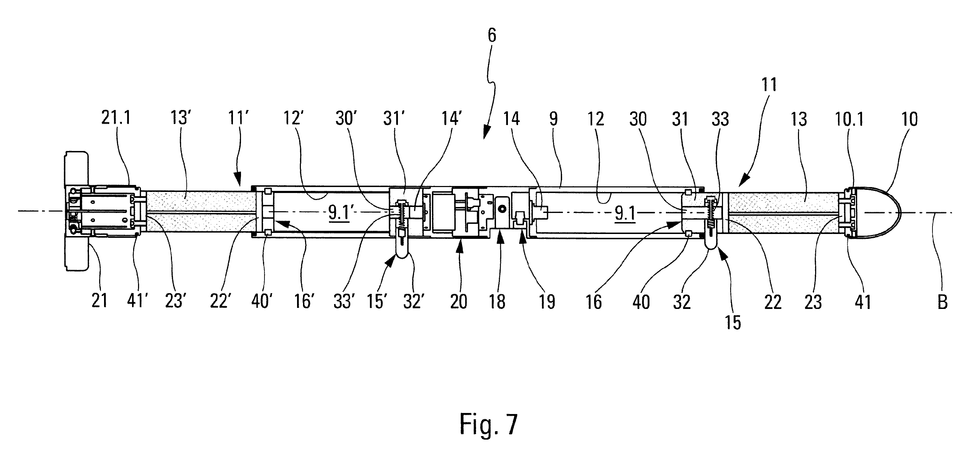

Dans la variante de réalisation montrée sur la figure 7, le dispositif ou projectile de leurrage 6 comporte deux leurres avec leurs charges respectives en position active, sortie par rapport au corps cylindrique 9.

Ainsi, en plus du leurre 11 de la précédente réalisation des figures 1 à 6, situé du côté avant du dispositif juste derrière la partie à coiffe 10, le dispositif 6 de la figure 7 est équipé d'un leurre 11' du côté arrière, juste avant la partie arrière à empennages 21. Pour pouvoir loger ce leurre arrière 11', le corps cylindrique 9 se prolonge de la longueur souhaitée depuis la partie 20 contenant notamment la source d'énergie, vers la partie arrière à empennages 21.

Les deux leurres 11 et 11' sont agencés coaxialement dans le corps cylindrique, selon l'axe B du dispositif 6, et comprennent chacun, comme précédemment, un étui 12, 12' reçu dans le logement 9.1, 9.1', et la charge 13, 13' logée dans l'étui. Pour permettre le déplacement axial de la charge hors du corps, les moyens de sortie et de maintien respectifs 16, 16' sont, dans cet exemple, du type télescopique analogue à la figure 6, c'est-à-dire que la charge et les supports coulissent eux-mêmes, sous l'action des moyens commandables 14, par rapport à leurs étuis liés au corps, de manière que chacune des charges soit amenée hors du corps cylindrique, tout en étant maintenue par rapport à celui-ci dans la position sortie.

La charge 13 du leurre avant 11 est portée par les supports 22, 23 respectivement solidaires de la partie cylindrique avant 10.1 à coiffe ogivale 10 et du manchon cylindrique 31, coulissant avec la charge sous l'action de l'impulseur 14. Le blocage axial du manchon 31 (et donc de la charge) par rapport au corps est assuré, dans cette réalisation, par un circlips ou élément analogue 40, marquant la position sortie de la charge hors du corps, ce qui permet au doigt de sécurité 32, alors hors du corps, de faire radialement saillie par le ressort 33, pour autoriser le passage des gaz de l'impulseur 14 en direction de la charge par l'alésage 30.

La charge 13' du leurre arrière 11' est quant à elle solidaire, par le support 23', de la partie arrière cylindrique 21.1 à empennages 21, tandis que le support 22' reste dans le corps cylindrique 9 en étant bloqué axialement dans celui-ci par un circlips 40' de manière à marquer la position sortie de la charge avec la partie à empennages.

En revanche, le manchon cylindrique 31' avec les moyens de sécurité 15' à doigt 32' reste fixe en position par rapport au corps cylindrique 9 et à la partie 20 qui est adjacente au manchon. Dans ce cas, le doigt de sécurité 32' est initialement pressé en position radialement rentrée pour obturer l'alésage 30' du manchon, par la paroi latérale du berceau 5 lorsque le dispositif ou véhicule 6 est encore solidaire du support tubulaire du système 2, fixé à l'avion.

On comprend donc que, selon l'agencement mobile ou fixe du manchon 31, 31' à doigt de sécurité, les charges 13, 13' des leurres du dispositif sont, entraînés en position active, sortie hors du corps, de manière décalée dans le temps.

Ainsi, dans la réalisation représentée, dès que le dispositif 6 est éjecté du berceau 5, le doigt de sécurité 32' du leurre arrière 11' est libéré et fait saillie radialement du corps cylindrique par le ressort associé 33. De la sorte, les gaz de l'impulseur 14' alors mis à feu, passent par l'alésage 30' du manchon 31' et entraînent vers l'extérieur du corps 9, les moyens de sortie télescopiques 16' formés par la charge et les supports, en position sortie. Par cette levée de la sécurité quasiment dès l'éjection du dispositif, la charge 13' est initiée rapidement.

En revanche, avec le leurre avant 11, le doigt de sécurité 32 n'est libéré (radialement en saillie) que lorsque la charge 13 est déplacée axialement et maintenue hors du corps cylindrique, par suite de la mise à feu de l'impulseur 14, entraînant le coulissement du manchon 31 à doigt 32.

L'activation de la charge avant 13 s'effectue par conséquent avec un retard par rapport à celle de la charge arrière 13'. Une telle réalisation du véhicule 6 à deux leurres « décalés » peut être privilégiée selon des besoins spécifiques de manière à prolonger l'efficacité du leurrage, mais n'est pas figée. On pourrait en effet avoir deux leurres avec des moyens de sécurité à doigts de libération identiques (à déclenchement « lent ou rapide »), ou bien on pourrait inverser les manchons à doigts de sécurité dans le dispositif illustré pour avoir une libération plus rapide du leurre avant par rapport au leurre arrière.

Par ailleurs, on remarque que des joints d'étanchéité 41, 41' sont prévus autour des parties cylindriques 10.1, 21.1 de la partie à coiffe 10 et de la partie à empennages 21. En position initiale des leurres contenus dans le corps des dispositifs eux-mêmes montés dans leurs berceaux respectifs, ces joints coopèrent avec la paroi interne du corps cylindrique 9, de manière à assurer la protection des charges vis-à-vis du milieu extérieur.

## Revendications

1. Procédé de leurrage pour la protection d'un aéronef au moyen d'au moins un leurre embarqué éjectable, pourvu d'une charge de leurrage, du type dans lequel :
- on enferme ledit leurre (11) dans un corps cylindrique fuselé (9), monté de façon éjectable sur l'aéronef,
- on éjecte ledit corps cylindrique fuselé (9) enfermant le leurre, parallèlement au flux aérodynamique de l'aéronef, et
- on sort la charge de leurrage dudit corps,
procédé **caractérisé par le fait que**,
- on maintient ladite charge de leurrage (13) en position sortie hors dudit corps cylindrique fuselé éjecté (9), et solidaire de ce dernier, et
- on commande ladite charge de leurrage sortie du corps pour la rendre active.

2. Procédé selon la revendication 1,
**caractérisé par le fait qu'**on déplace par coulissement la charge (13) par rapport au corps cylindrique fuselé (9).

3. Procédé selon la revendication 2,
**caractérisé par le fait que**, par rapport au corps cylindrique fuselé (9), on fait coulisser la charge vers l'avant ou l'arrière dudit corps.

4. Procédé selon l'une des revendications 1 à 3,
**caractérisé par le fait que** l'on prévoit deux leurres (11, 11') avec respectivement une charge (13) en avant du corps cylindrique (9) et une charge (13') en arrière dudit corps, lesdites charges étant aptes à sortir simultanément ou séquentiellement hors du corps tout en étant maintenues solidaires de celui-ci.

5. Dispositif de leurrage pour la mise en oeuvre du procédé de protection d'un aéronef, spécifié sous l'une des revendications 1 à 4, ledit dispositif comportant un corps cylindrique fuselé (9) logeant au moins un leurre (11) ayant une charge de leurrage (13), et des moyens de sortie commandables de la charge de leurrage par rapport au corps,
**caractérisé par le fait que** ledit corps cylindrique fuselé (9) est éjectable et **par le fait que** lesdits moyens de sortie commandables (16) sont prévus entre le leurre (11) et le corps cylindrique fuselé (9) et sont aptes à maintenir la charge de leurrage (13) en position sortie, par rapport au corps, solidaire de ce dernier.

6. Dispositif selon la revendication 5,
**caractérisé par le fait que** les moyens (16) de sortie et de maintien sont du type par coulissement selon l'axe (B) du corps cylindrique fuselé (9), pour occuper une position rentrée, pour laquelle la charge de leurrage (13) est enfermée, et, une position sortie, pour laquelle la charge (13) est hors dudit corps, tout en étant maintenue par rapport à celui-ci.

7. Dispositif selon l'une des revendications 5 ou 6,
**caractérisé par le fait que** les moyens (16) de sortie et de maintien comprennent des rails de support parallèles (25), aptes à coulisser par rapport au corps cylindrique (9) et entre lesquels est reçue et maintenue la charge de leurrage (13) en position sortie.

8. Dispositif selon l'une des revendications 5 ou 6,
**caractérisé par le fait que** les moyens (16) de sortie et de maintien sont du type télescopique, logés dans le corps cylindrique en maintenant la charge de leurrage en position sortie par rapport au corps cylindrique.

9. Dispositif selon l'une des revendications 5 à 8,
**caractérisé par le fait qu'**il comporte des moyens commandables à impulseur (14) montés dans le leurre (11) pour permettre, lorsqu'ils sont initiés, le passage des moyens (16) de sortie et de maintien de la position rentrée, à l'intérieur du corps, à la position sortie, à l'extérieur du corps.

10. Dispositif selon la revendication 9,
**caractérisé par le fait qu'**il comporte des moyens de sécurité (15) prévus dans le leurre entre les moyens commandables à impulseur (14) et la charge de leurrage (13), empêchant tout déclenchement de la charge, tant que les moyens de sortie et de maintien occupent la position rentrée.

11. Dispositif selon la revendication 10,
**caractérisé par le fait que** les moyens de sécurité (15) comportent au moins un doigt radialement déplaçable (32, 32') autorisant le passage des moyens de sortie et de maintien en position sortie sous l'action des moyens commandables (14) au moment de la séparation du corps cylindrique (9) d'avec l'aéronef ou après celle-ci.

12. Dispositif selon la revendication 9 ou 10,
**caractérisé par le fait que** les moyens commandables à impulseur (14) commandent, en plus du déplacement des moyens de sortie (16), la mise en fonctionnement de la charge de leurrage (13), lorsqu'elle est en position sortie.

13. Dispositif selon l'une des revendications 5 à 12,
**caractérisé par le fait qu'**il comporte un leurre (11) en avant du corps cylindrique fuselé (9) et un leurre (11') en arrière dudit corps, lesdits leurres étant solidaires de moyens de sortie et de maintien respectifs déplaçables vers l'avant et vers l'arrière dudit corps, simultanément ou séquentiellement.

14. Système de leurrage pour la protection d'un aéronef, comportant :
- un support tubulaire (4) pour la réception d'un corps cylindrique fuselé (9) d'un dispositif de leurrage (6), ledit support étant apte à être fixé à l'aéronef ; et
- un mécanisme d'éjection (7) du dispositif de leurrage (6) par rapport audit support,
**caractérisé par le fait que** ledit dispositif de leurrage (6) est tel que défini selon l'une quelconque des revendications 5 à 13.

## Patentansprüche

1. Verfahren zur Täuschung für den Schutz eines Flugzeugs mindestens mittels einer abwerfbaren, an Bord befindlichen Attrappe, die mit einer Ladung zur Täuschung versehen ist, von Typ, in dem:
- die Attrappe (11) in einem zylindrischen, spindelförmigen Körper (9) eingeschlossen wird, die auf abwerfbare Weise an dem Flugzeug angebracht ist,
- der zylindrische, spindelförmige Körper (9), welcher die Attrappe umschließt, parallel zu der aerodynamischen Strömung des Flugzeugs abgeworfen wird, und
- die Ladung zur Täuschung aus dem Körper ausgefahren wird,
wobei das Verfahren **dadurch gekennzeichnet ist, dass**
- die Ladung (13) zur Täuschung in einer Position, die außerhalb des zylindrischen, spindelförmigen Körpers (9) ausgefahren ist, beibehalten wird, und mit dem letzteren fest verbunden ist, und
- die Ladung zur Täuschung, die aus dem Körper ausgefahren ist, gesteuert wird, um sie aktiv zu machen.

2. Verfahren nach Anspruch 1,
**dadurch gekennzeichnet, dass** die Ladung (13) mit Bezug auf den zylindrischen, spindelförmigen Körper (9) durch Verschieben deplatziert wird.

3. Verfahren nach Anspruch 2,
**dadurch gekennzeichnet, dass** mit Bezug auf den zylindrischen, spindelförmigen Körper (9) die Ladung nach vorne oder hinten von dem Körper verschoben wird.

4. Verfahren nach einem der Ansprüche 1 bis 3,
**dadurch gekennzeichnet, dass** zwei Attrappen (11, 11') mit einer Ladung (13) vor dem zylindrischen Körper (9) beziehungsweise einer Ladung (13') hinter dem Körper vorgesehen werden, wobei die Ladungen geeignet sind, gleichzeitig oder sequentiell außerhalb des Körpers ausgefahren zu werden, wobei sie fest mit diesem verbunden beibehalten werden.

5. Vorrichtung zur Täuschung zum Einsatz für das Verfahren zum Schutz eines Flugzeugs nach einem der Ansprüche 1 bis 4, wobei die Vorrichtung einen zylindrischen, spindelförmigen Körper (9), in der zumindest eine Attrappe (11) aufgenommen ist, die eine Ladung zur Täuschung (13) hat, und steuerbare Mittel zum Ausfahren der Ladung zur Täuschung mit Bezug auf den Körper umfasst, **dadurch gekennzeichnet, dass** der zylindrische, spindelförmige Körper (9) abwerfbar ist, und dass die steuerbaren Mittel (16) zum Ausfahren zwischen der Attrappe (11) und dem zylindrischen, spindelförmigen Körper (9) vorgesehen sind und geeignet sind, die Ladung (13) zur Täuschung in der ausgefahrenen Position mit Bezug auf den Körper beizubehalten, wobei sie mit dem letzteren fest verbunden ist.

6. Vorrichtung nach Anspruch 5,
**dadurch gekennzeichnet, dass** die Mittel (16) zum Ausfahren und Beibehalten vom Typ durch Gleiten entlang der Achse (B) des zylindrischen, spindelförmigen Körpers (9) sind, um eine eingefahrene Position, für welche die Ladung zur Täuschung (13) eingeschlossen ist, und eine ausgefahrene Position zu besetzen, für welche die Ladung (13) außerhalb des Körpers ist, wobei sie mit Bezug auf diesen beibehalten wird.

7. Vorrichtung nach einem der Ansprüche 5 oder 6,
**dadurch gekennzeichnet, dass** die Mittel (16) zum Ausfahren und Beibehalten parallele Stützschienen (25) umfassen, die geeignet sind, mit Bezug auf den zylindrischen Körper (9) zu gleiten und zwischen denen die Ladung zur Täuschung (13) in ausgefahrener Position aufgenommen und beibehalten ist.

8. Vorrichtung nach einem der Ansprüche 5 oder 6,
**dadurch gekennzeichnet, dass** die Mittel (16) zum Ausfahren und Beibehalten vom teleskopischen Typ sind, wobei sie in dem zylindrischen Körper aufgenommen sind, während die Ladung zur Täuschung in ausgefahrener Position mit Bezug auf den zylindrischen Körper beibehalten wird.

9. Vorrichtung nach einem der Ansprüche 5 bis 8,
**dadurch gekennzeichnet, dass** sie durch einen Impulsgeber (14) steuerbare Mittel umfasst, die in der Attrappe (11) angebracht sind, um, während sie initiiert werden, den Durchgang der Mittel (16) zum Ausfahren und Beibehalten von der eingefahrenen Position im Inneren des Körpers zu der ausgefahrenen Position außerhalb des Körpers zu erlauben.

10. Vorrichtung nach Anspruch 9,
**dadurch gekennzeichnet, dass** sie Sicherheitsmittel (15) umfasst, die in der Attrappe zwischen den durch den Impulsgeber (14) steuerbaren Mitteln und der Ladung der Attrappe (13) vorgesehen sind, wodurch das Auslösen der Ladung verhindert wird, während die Mittel zum Ausfahren und zum Bebehalten die eingefahrene Position einnehmen.

11. Vorrichtung nach Anspruch 10,
**dadurch gekennzeichnet, dass** die Sicherheitsmittel (15) mindestens einen radial deplatzierbaren Finger (32, 32') aufweisen, der den Durchgang der Mittel zum Ausfahren und Beibehalten in der Ausgefahrenen Position unter Einwirkung der steuerbaren Mittel (14) im Augenblick der Trennung des zylindrischen Körpers (9) von dem Flugzeug oder danach autorisieren.

12. Vorrichtung nach Anspruch 9 oder 10,
**dadurch gekennzeichnet, dass** die durch den Impulsgeber (14) steuerbaren Mittel zusätzlich zu der Deplatzierung der Mittel (16) zum Ausfahren das Funktionsfähigmachen der Ladung (13) zur Täuschung steuern, während sie in der ausgefahrenen Position ist.

13. Vorrichtung nach einem der Ansprüche 5 bis 12,
**dadurch gekennzeichnet, dass** sie eine Attrappe (11) vor dem zylindrischen, spindelförmigen Körper (9) und eine Attrappe (11') hinter dem Körper aufweist, wobei die Attrappen mit dem Mittel zum Ausfahren und Beibehalten fest verbunden sind, die nach vorne bzw. nach hinten von dem Körper gleichzeitig oder sequentiell deplatzierbar sind.

14. System zur Täuschung zum Schutz eines Flugzeugs mit:
- einer röhrenförmigen Stütze (4) zur Aufnahme eines spindelförmigen, zylindrischen Körpers (9) einer Vorrichtung (6) zur Täuschung, wobei die Stütze geeignet ist, an dem Flugzeug befestigt zu werden; und
- einem Mechanismus (7) zum Auswerfen der Vorrichtung (6) zur Täuschung mit Bezug auf die Stütze,
**dadurch gekennzeichnet, dass** die Vorrichtung (6) zur Täuschung nach einem der Ansprüche 5 bis 13 definiert ist.

## Claims

1. Decoy method for protecting an aircraft by means of at least one ejectable on-board decoy, provided with a decoy charge, of the type wherein:
- said decoy (11) is enclosed in a streamlined cylindrical body (9), mounted ejectably on the aircraft,
- said streamlined cylindrical body (9) enclosing the decoy is ejected, parallel to the aerodynamic stream of the aircraft, and
- the decoy charge is removed from said body,
a method **characterised in that**
- said decoy charge (13) is held in a position removed from said streamlined cylindrical body (9), and attached to the latter, and
- said decoy charge removed from the body is controlled in order to make it active.

2. Method according to claim 1, **characterised in that** the charge (13) is moved by sliding with respect to the streamlined cylindrical body (9).

3. Method according to claim 2, **characterised in that**, with respect to the streamlined cylindrical body (9), the charge is slid towards the front or rear of said body.

4. Method according to one of claims 1 to 3, **characterised in that** two decoys (11, 11') are provided with respectively one charge (13) at the front of the cylindrical body (9) and one charge (13') at the rear of said body, said charges being able to emerge simultaneously or sequentially out of the body while being kept attached thereto.

5. Decoy device for implementing the method for protecting an aircraft, according to one of claims 1 to 4, said aircraft comprising a streamlined cylindrical body (9) housing at least one decoy (11) having a decoy charge (13), and controllable means for removing the decoy charge with respect to the body, **characterised in that** said streamlined cylindrical body (9) is ejectable and **in that** said controllable removal means (16) are provided between the decoy (11) and the streamlined cylindrical body (9) and are capable to hold the decoy charge (13) in the removed position, with respect to the body, attached to the latter.

6. Device according to claim 5, **characterised in that** the removal and holding means (16) are of the type acting by sliding along the axis (B) of the streamlined cylindrical body (9), in order to occupy a retracted position in which the decoy charge (13) is enclosed, and a removed position in which the charge (13) is outside said body while being held with respect thereto.

7. Device according to either claim 5 or claim 6, **characterised in that** the removal and holding means (16) comprise parallel support rails (25) capable of sliding with respect to the cylindrical body (9) and between which the decoy charge (13) is received and held in the removed position.

8. Device according to either claim 5 or claim 6, **characterised in that** the removal and holding means (16) are of the telescopic type, housed in the cylindrical body while holding the decoy charge in the removed position with respect to the cylindrical body.

9. Device according to any of claims 5 to 8, **characterised in that** it comprises initiator-type controllable means (14) mounted in the decoy (11) in order, when they are initiated, to allow the removal and holding means (16) to pass from the retracted position inside the body to the removed position outside the body.

10. Device according to claim 9, **characterised in that** it comprises safety means (15) provided in the decoy between the initiator-type controllable means (14) and the decoy charge (13), preventing any triggering of the charge as long as the removal and holding means occupy the retracted position.

11. Device according to claim 10, **characterised in that** the safety means (15) comprise at least one radially movable finger (32, 32') allowing the removal and holding means to pass into the removed position under the action of the controllable means (14) at the moment when the cylindrical body (9) separates from the aircraft or after this.

12. Device according to claim 9 or claim 10, **characterised in that** the initiator-type controllable means (14) control, in addition to the movement of the removal means (16), the activation of the decoy charge (13) when it is in the removed position.

13. Device according to any of claims 5 to 12, **characterised in that** it comprises a decoy (11) at the front of the streamlined cylindrical body (9) and a decoy (11') at the rear of said body, said decoys being fixed to respective removal and holding means movable towards the front and towards the rear of said body, simultaneously or sequentially.

14. Decoy system for protecting an aircraft, comprising:
- a tubular support (4) for receiving a streamlined cylindrical body (9) of a decoy device (6), said support capable of being fixed to the aircraft; and
- a mechanism (7) for ejecting the decoy device (6) with respect to said support,
**characterised in that** said decoy device (6) is as defined according to any of claims 5 to 13.
